Europäisches Patentamt

(19) European Patent Office

Office européen des brevets

(11) Numéro de publication: **0 244 300**
**A1**

(12) **DEMANDE DE BREVET EUROPEEN**

(21) Numéro de dépôt: **87400896.4**

(22) Date de dépôt: **17.04.87**

(51) Int. Cl.³: **C 04 B 35/46**
**H 01 G 4/12**

(30) Priorité: **25.04.86 FR 8606027**

(43) Date de publication de la demande:
**04.11.87 Bulletin 87/45**

(84) Etats contractants désignés:
**DE FR GB**

(71) Demandeur: **THOMSON-CSF**
**173, Boulevard Haussmann**
**F-75379 Paris Cédex 08(FR)**

(72) Inventeur: **Gaucher, Philippe**
**THOMSON-CSF SCPI 19, avenue de Messine**
**F-75008 Paris(FR)**

(72) Inventeur: **Ganne, Jean-Pierre**
**THOMSON-CSF SCPI 19, avenue de Messine**
**F-75008 Paris(FR)**

(72) Inventeur: **Kurfiss, Jean-Claude**
**THOMSON-CSF SCPI 19, avenue de Messine**
**F-75008 Paris(FR)**

(74) Mandataire: **Lepercque, Jean et al,**
**THOMSON-CSF SCPI 19, avenue de Messine**
**F-75008 Paris(FR)**

(54) **Matériau céramique à base de titanate de strontium, son procédé de fabrication et condensateur utilisant ce matériau.**

(57) L'invention concerne un matériau céramique pour condensateur de type III à base de titanate de strontium et son procédé de fabrication comprenant une seule étape de frittage. Le matériau peut comprendre entre 0,2 et 2 % en moles de niobium, de tantale, de tungstène, de lanthane ou de néodyme, entre 0,1 et 1 % en moles de bismuth, entre 0,1 et 0,5 % en moles de cuivre et entre 0,1 et 0,5 % en moles d'aluminium.

MATERIAU CERAMIQUE A BASE DE TITANATE DE STRONTIUM,
SON PROCEDE DE FABRICATION ET
CONDENSATEUR UTILISANT CE MATERIAU.

La présente invention se rapporte à un matériau céramique à base de titanate de strontium, particulièrement bien adapté à la fabrication de condensateurs multicouches. C'est un matériau dit de type III et qui est constitué de grains semiconducteurs séparés par des barrières électriques dues aux joints de grains et qui s'opposent au franchissement des électrons d'un grain à un autre grain adjacent.

Il est du domaine de l'art connu, notamment par les brevets FR 1 581 387 et FR 2 283 535, que des titanates de baryum ou des titanates de strontium dopés avec des ions de valence 5 ou 6 qui se substituent au titane, ou 3 qui se substituent au strontium, et frittés à haute température sous atmosphère réductrice (azote hydrogéné), puis réoxydés à plus basse température, permettent d'obtenir des constantes diélectriques supérieures à 30000. Mais, si la constante diélectrique jusqu'à 1 MHz est très élevée et les pertes diélectriques inférieures à 1 %, une tension continue de polarisation de quelques centaines de volts par millimètre provoque une forte dégradation de ces propriétés. En effet, la chute de potentiel se répartit essentiellement dans les régions très limitées que constituent les joints de grains dans lesquelles apparaissent par conséquent des champs électriques très intenses. Il se forme alors une couche d'inversion et la hauteur de la barrière électrique diminue. Pour renforcer cette barrière électrique, les fabricants de condensateurs disques ont dû ajouter une deuxième phase fusible à base d'oxydes de bismuth, de bore, de plomb et d'un élément accepteur comme le cuivre qui, au cours d'un deuxième traitement thermique vers 1000-1200°C, diffuse et réagit dans les joints de grains. Cette technique a fait l'objet des dépôts de brevets US 3 933 668 et FR 2 339 235. Ce traitement abaisse la constante diélectrique, mais permet de conserver une résistivité d'isolement de $10^{10}\Omega$ .cm seulement jusqu'à 100-200 V pour un condensateur disque. Ce traitement est surtout efficace si la céramique possède des gros grains car alors la phase fusible peut pénétrer facilement dans tout le volume du matériau.

Ces titanates à gros grains sont donc utilisables pour faire des condensateurs disques de tension nominale comprise entre 20 et 45 V. Cependant, l'efficacité volumique de tels condensateurs (environ 3 nF/mm$^3$) est très inférieure à celle des condensateurs multicouches par exemple à base de $BaTiO_3$ (environ 30 nF/mm$^3$) qui est un matériau de type II. En effet, la plus faible constante diélectrique du matériau est largement compensée par le nombre de couches de diélectrique en parallèle. Si l'efficacité volumique C/V d'un condensateur est proportionnelle à $\mathcal{E}/d^2$ (où d est l'épaisseur d'une couche de diélectrique), la constante diélectrique d'un matériau type III est proportionnelle à la taille des grains. On a donc intérêt à réduire au maximum l'épaisseur de diélectrique (jusqu'à 30 $\mu$ par exemple) tout en réduisant la taille des grains (en-dessous de 10 $\mu$), pour réaliser un condensateur multicouche de type III. La perte en constante diélectrique intrinsèque du matériau est largement compensée par le gain en surface d'électrode et la diminution de l'épaisseur du diélectrique.

Pour pouvoir obtenir des condensateurs multicouches à base de $SrTiO_3$, il faut alors modifier profondément le protocole classique de préparation du matériau. Il est nécessaire de fritter sous atmosphère non réductrice car les alliages à base de palladium des électrodes sont incompatibles avec l'hydrogène. Il est impossible d'introduire la deuxième phase fusible à partir de la surface puisque la faible taille des grains nécessite des traitements de diffusion très longs. Les brevets FR 2 491 055 et US 4 419 310 ont abordé le problème du frittage sous air d'un matériau à base de $SrTiO_3$. Le premier décrit un procédé permettant de préparer des matériaux à grains fins ayant de bonnes constantes diélectriques (8000 à 12000) mais des pertes élevées (de 1 à 20 %). Les dopants n préférés sont le bismuth (entre 0,5 et 5 %) et le tungstène. Les dopants p préférés sont le cuivre et l'argent. Le second brevet concerne un matériau à gros grains (20 à 50 $\mu$) obtenu en deux étapes. Le traitement de diffusion à partir de la surface permet effectivement d'obtenir des tensions de seuils élevées (1000 à 2000 V/mm), mais les grains sont trop gros pour réaliser des structures multicouches à faible épaisseur de diélectrique. De plus, ces deux brevets utilisent une métallisation d'argenture à chaud, qui, par les oxydes qu'elle contient, modifie les propriétés d'isolation intrinsèque des joints de grains. L'effet de cette argenture disparaîtrait dans un cofrittage en multicouche.

Afin de pallier ces inconvénients, l'invention propose un matériau à base de titanate de strontium possédant une constante diélectrique comprise entre 3000 et 10000 et susceptible de remplacer avantageusement le titanate de baryum à courbe plate (courbe de la constante diélectrique en fonction de la température) dans les condensateurs multicouches préparés par la technologie classique de cofrittage du diélectrique et des électrodes internes.

L'invention a donc pour objet un procédé de fabrication d'un matériau céramique de type III à base de titanate de strontium $SrTiO_3$, caractérisé en ce qu'il comprend les étapes suivantes :

- préparation d'une chamotte de $SrTiO_3$ par calcination sous air d'un mélange préalablement broyé de carbonate de strontium $SrCO_3$ et d'oxyde de titane $TiO_2$, ce premier broyage permettant également d'ajouter un ou plusieurs éléments, entre 0,2 et 2 % en moles, introduits sous forme d'oxyde de niobium, de tantale, de tungstène, de lanthane et de néodyme, les proportions des constituants étant telles que le rapport stoechiométrique des ions en site titane sur les ions en site strontium soit de 1,

- un second broyage pendant lequel le rapport stoechiométrique est réajusté entre 0,98 et 1,02, ce réajustement étant réalisé par ajout de $SrCO_3$, de $TiO_2$ ou d'un composé ferroélectrique contenant du bismuth,

- frittage sous air entre 1400 et 1450°C.

L'invention a également pour objet un matériau céramique de type III à base de titanate de strontium $SrTiO_3$ et à diamètre moyen de grains inférieur à 10 $\mu$, caractérisé en ce qu'il comprend entre 0,2 et 2 % en moles d'un ou de plusieurs des éléments suivants : niobium, tantale, tungstène, lanthane et néodyme.

L'invention a encore pour objet un condensateur multicouche dont le matériau diélectrique est celui défini ci-dessus.

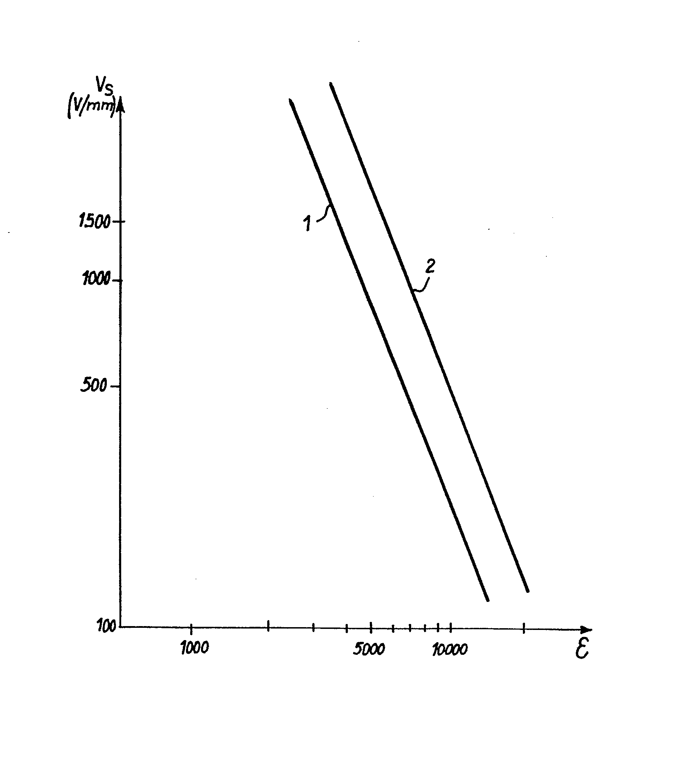

L'invention sera mieux comprise et d'autres avantages apparaîtront au moyen de la description qui va suivre et de la figure annexée qui est un diagramme montrant la relation entre la tension de seuil et la constante diélectrique.

Un matériau céramique dit de type III, constitué de grains semiconducteurs séparés par des barrières électriques qui s'opposent au franchissement des électrons d'un grain à un autre grain adjacent, possède une constante diélectrique apparente $\varepsilon_{eff}$ très élevée et donnée par la formue approchée

$$\varepsilon_{eff} = \varepsilon D/d$$

où $\varepsilon$ est la constante diélectrique du même matériau isolant, D la taille des grains et d l'épaisseur de la région isolante intergranulaire.

A titre d'exemple, une céramique constituée par un matériau de constante diélectrique égale à 300 dans l'état isolant et ayant des grains semiconducteurs de diamètre moyen 50 $\mu$ et une constante diélectrique apparente de 30000 possèdera, sur une épaisseur de 0,5 mm, dix barrières électriques en série d'épaisseur 0,5 $\mu$ chacune. Pour une tension extérieure de 100 V, le champ au niveau des joints de grains vaudra alors 20000 V/mm, soit une différence de potentiel de 10 V de part et d'autre. La largeur de la bande interdite de $SrTiO_3$ valant approximativement 3 eV, la hauteur de la barrière électrique diminue rapidement pour des tensions supérieures à 3 V à cause de la formation d'une couche d'inversion.

La présente invention permet d'obtenir en une seule étape de frittage un matériau ayant simultanément les propriétés suivantes :

1) des grains fins de taille inférieure à 10 $\mu$ ;

2) une résistivité d'isolement supérieure à $10^{10} \Omega$.cm entre 0 volt et le champ de seuil $E_s$ (défini comme étant le champ pour lequel $\rho = 10^{10} \Omega$.cm) qui peut varier entre 200 V et plus de 1500 V par mm de façon sensiblement proportionnelle à l'inverse de la constante diélectrique $\varepsilon$. Un compromis peut donc a priori être trouvé entre $\varepsilon$ et $E_s$ : constante diélectrique plus élevée, mais champ de seuil plus faible ou constante diélectrique plus faible, mais champ de seuil plus élevé. C'est ce que montre la figure

0244300

annexée donnant la relation entre le champ de seuil $E_s$ exprimé en V/mm et la constante diélectrique de matériaux frittés suivant un cycle de température classique (courbe 1) et un cycle comportant une descente rapide entre le palier de frittage et 1200° C (courbe 2). On peut ainsi ajuster la tension nominale d'utilisation et la capacité volumique qui en résulte ;

3) des pertes diélectriques à 1 kHz inférieures à 1 %.

Cependant, la présente invention montre qu'on peut quand même améliorer à la fois $\mathcal{E}$ et $E_s$ par une structure nouvelle de la barrière électrique. La procédure utilisée est la suivante.

La chamotte de $SrTiO_3$ est préparée par calcination sous air à 1050°C d'un mélange de carbonate de strontium $SrCO_3$ et d'oxyde de titane $TiO_2$ auquel on a ajouté entre 0,2 et 2 % (de préférence 1 à 2 %) en mole d'oxyde de niobium, tantale, tunsgtène, lanthane ou néodyme. L'oxyde préféré est l'oxyde de tantale car il conduit à un facteur de pertes diélectriques plus faible. Le broyage des poudres de départ ainsi que celui de la chamotte est réalisé de préférence par attrition avec des billes de verres, ce qui permet de contrôler précisément la stoechiométrie (rapport B/A des ions en site Ti, sur les ions en site Sr), la silice introduite n'entrant pas dans le réseau du titanate. Elle permet de plus de favoriser le frittage en agissant comme fondant.

Au cours du deuxième broyage, la composition chimique B/A peut éventuellement être réajustée entre 0,98 et 1,02 par ajout de $SrCO_3$, $TiO_2$ ou un composé ferroélectrique contenant du bismuth comme $SrBi_4Ti_4O_{15}$. Ce dernier élément peut être également ajouté sous forme de $Bi_2O_3$, $BiONO_3$ ou un quelconque sel insoluble dans le milieu de broyage qui est l'eau. La quantité molaire de bismuth peut varier entre 0,1 % et 1 %, la tranche 0,2 - 0,4 % étant préférée car elle donne un facteur de pertes diélectriques plus faible.

Un autre dopant de type p en faible proportion (0,1 % molaire typiquement) peut être ajouté sous forme d'une solution aqueuse d'un sel se décomposant en-dessous de 1000°C (nitrate, oxalate...). Le dopant est ainsi bien distribué à la surface des grains de la poudre avant que ceux-ci ne commencent à fritter.

Le frittage des disques pressés à une pression d'environ 1 T/cm$^2$ avec un liant organique tel que l'alcool polyvinylique (PVA) est effectué entre 1400 et 1450°C sous air statique. La vitesse de montée en température peut varier de 200°C/h à 50°C/h et la durée du palier de 1h à 10h. Une montée lente et un palier court sont préférés.

Après frittage, on évapore, sur les faces principales des disques, des métallisations de cuivre qui ne modifient pas les caractéristiques du matériau céramique. Aucun recuit n'est alors nécessaire. La taille maximale des grains de la céramique varie entre 2 $\mu$ et 20 $\mu$, les compositions voisines de B/A = 1 donnant les grains les plus fins. La constante diélectrique relative $\mathcal{E}$ peut être donnée par la relation approchée $\mathcal{E}$ = C.D, D étant exprimé en $\mu$ et C valant entre 300 et 1000 $\mu^{-1}$ selon le traitement thermique utilisé.

La caractéristique en température de ces matériaux nouveaux correspond aux normes Y5R ou X7S. Les pertes diélectriques passent par un maximum situé entre 10 et 30 % au voisinage de 150°C. La variation de capacité est inférieure à 10 % jusqu'à 1 MHz, ce qui est comparable à un condensateur de type II à base de matériau ferroélectrique.

Quelques exemples de réalisation, donnés à titre non limitatif, vont illustrer l'invention.

Exemple I.

De l'oxyde de titane et du carbonate de strontium sont mélangés et broyés dans l'eau à l'attritor avec des billes de verre d'environ 3 mm de diamètre. Différents dopants n qui se substituent en site Ti (Nb, Ta, W) ou en site Sr (La, Nd) permettent de rendre l'intérieur du grain semiconducteur après frittage sous air. Ces dopants sont introduits à partir des oxydes correspondants. Après séchage à l'épiradiateur et tamisage, la poudre obtenue est chamottée pendant 2 heures à 1050°C sous courant d'oxygène, puis rebroyée à l'attritor en même temps que des ajouts en faible proportion : oxyde de titane pour réajuster la stoechiométrie entre 1,00 et 1,02.

La poudre est à nouveau séchée et tamisée, puis enrobée avec un liant (PVA). Des disques ont été pressés à 1 T/cm$^2$, puis frittés en une seule étape sous air statique. Les constantes diélectriques les plus élevées sont obtenues avec le niobium et le tantale, ce dernier donnant de meilleures pertes diélectriques (tg $\delta$ < 0,5 %) à 1 kHz. La tenue en fréquence est toujours bonne jusqu'à 1 MHz, la capacité diminuant ensuite plus ou moins rapidement suivant le dopant. Le tungstène s'avère mauvais sur ce plan.

Le tableau I, placé en fin de description, donne les principales caractéristiques des matériaux obtenus pour des compositions ne contenant pas de dopant p. Si la durée du palier de température augmente, la constante diélectrique augmente également au détriment, dans la plupart des cas, de la résistivité d'isolement et de la tenue de la capacité en fréquence et en tension.

Exemple II.

La préparation est identique à l'exemple I, mais du cuivre a été ajouté (entre 0,1 et 0,5 %) à la composition chamottée au cours du deuxième broyage, sous forme d'une solution de nitrate dans l'eau. La constante diélectrique diminue légèrement, mais la résistance d'isolement gagne un facteur compris entre 10 et 100. Les pertes restent inférieures à 1 % pour les compositions B/A proches de 1. Le champ de seuil, défini comme étant le champ pour lequel la résistivité du matériau vaut $\rho_i = 10^{10}$ $\Omega$.cm, supérieur à 1000 V/mm est obtenu avec une constante de 5400 pour le second traitement thermique grâce auquel on accentue la différence entre l'intérieur du grain et la zone réoxydée de la barrière.

Le tableau II, placé en fin de description, donne les principales caractéristiques de ces compositions. Le deuxième exemple montre l'intérêt d'une descente rapide après le palier. Cette descente rapide a été effectuée de 1432 à 1200°C à une vitesse supérieure à 1000°C par heure.

Exemple III.

La préparation est identique à l'exemple II, mais on ajouté du bismuth en plus du cuivre, sous forme de nitrate basique $BiONO_3$ insoluble, à la chamotte au moment du deuxième broyage. Un deuxième dopant p, favorisant la croissance des grains, a été également ajouté : l'aluminium (entre 0,1 et 0,5 %) sous forme de solution nitrique. La résistivité d'isolement est toujours supérieure à $10^{11}$ $\Omega$.cm et la tension de seuil varie en sens inverse de la constante diélectrique. Avec une montée en température lente, on

obtient $\mathcal{E}$ = 4000 pour $E_s >$ 1000 V/mm. Le traitement avec refroidissement rapide améliore la constante diélectrique et la tenue en fréquence sans modifier la taille des grains (le diamètre moyen des grains étant inférieur à 10 $\mu$ et les grains les plus gros n'excédant pas 15 $\mu$ pour $\mathcal{E}$ = 6900).

Le tableau III, placé en fin de description, donne les principales caractéristiques de compositions qui comprennent 1 % de tantale et 0,2 % de cuivre. La descente rapide a été effectuée de 1436 à 1200°C à une vitesse de refroidissement supérieure à 1000°C par heure.

Le tableau IV donne les principales caractéristiques de compositions comprenant 1 % de tantale et 0,4 % de bismuth introduit par le $BiONO_3$. Il montre l'influence de l'aluminium par rapport au cuivre ou en association avec le cuivre. L'aluminium, introduit à faible taux, a la propriété d'augmenter la constante diélectrique au détriment du champ de seuil.

Le taux de bismuth optimal se situe entre 0,2 et 0,4 % molaire.

Exemple IV.

La préparation est identique à l'exemple III, mis à part que l'on a introduit le bismuth sous la forme d'un composé ferroélectrique de formule $SrBi_4Ti_4O_{15}$. Sa structure lamellaire constituée de feuillets perovskites s'accorde bien avec celle de $SrTiO_3$. L'excès de titane introduit a été corrigé par un ajout de carbonate de strontium. On remarque que, même en l'absence de cuivre, on peut obtenir un champ de seuil supérieur à 1000 V/mm avec une constante diélectrique supérieure à 4000. Les pertes sont toujours inférieures à 1 % et la résistivité supérieure à $10^{11} \Omega$ .cm. Une fois de plus, la montée lente en température améliore le seuil $E_s$ et la constante $\mathcal{E}$ en même temps. Des temps de palier de frittage plus long font grossir les grains au détriment de la tenue en tension.

Le tableau V donne les principales caractéristiques de compositions comprenant 1% de Ta et 0,4 % de Bi.

La courbe 2 du diagramme de la figure annexée montre l'amélioration apportée par la descente rapide en température. Le

compromis entre $\mathcal{E}$ et $E_s$ est meilleur que précédemment.

On peut utiliser le matériau céramique selon l'invention pour réaliser des condensateurs multicouches en employant les techniques connues de l'homme de l'art pour réaliser des condensateurs multicouches à partir de matériau de type II.

TABLEAU I

| Dopant | Durée du palier à 1435°C | $\varepsilon$ | tg $\delta$ (%) | $\Delta C/C(0-150V)$ (%) | $\rho_i$ ($\Omega$.cm) | $\Delta C/C(10^3-10^7 Hz)$ (%) | $\Delta C/C(10^3-10^6 Hz)$ (%) |
|---|---|---|---|---|---|---|---|
| Nb (1 %) | 1 h | 6700 | 0,7 | − 8 | $10^{11}$ | − 37 | − 5 |
|  | 10 h | 8510 | 0,6 | − 12 | $2.10^{11}$ | − 35 | − 5 |
| Ta (1 %) | 1 h | 5000 | 0,3 | − 9 | $5.10^{10}$ | − 35 | − 5 |
|  | 10 h | 6850 | 0,4 | − 9 | $5.10^{10}$ | − 50 | − 10 |
| W (1 %) | 1 h | 3900 | 1,6 | − 8 | $5.10^{10}$ | − 90 | − 60 |
|  | 10 h | 7200 | 1,5 | − 7 | $5.10^{9}$ | − 96 | − 80 |
| La (2 %) | 1 h | 1800 | 0,7 | − 1 | $10^{12}$ | − 18 | − 5 |
|  | 10 h | 3500 | 1,7 | − 2,5 | $10^{10}$ | − 30 | − 3 |
| Nd (2 %) | 1 h | 2200 | 0,6 | − 4 | $5.10^{11}$ | − 27 | − 3 |
|  | 10 h | 5250 | 1,7 | − 8 | $10^{9}$ | − 42 | − 3 |

0244300

TABLEAU II

| Composition | Traitement thermique | B/A | $\varepsilon$ | tg $\delta$ (%) | $\Delta C/C(0\text{-}150V)$ (%) | $\rho_i(\Omega.cm)$ | $E_s(\rho_i = 10^{10}\Omega.cm)$ (V/mm) | $\Delta C/C(10^3\text{-}10^6 Hz)$ (%) |
|---|---|---|---|---|---|---|---|---|
| 1 % Ta + 0,2 % Cu | 1432°C – 1 h | 0,99 | 3000 | 2,0 | 2 | $10^{10}$ | 30 | – 10 |
| | | 1,00 | 2600 | 0,3 | 2 | $10^{12}$ | > 1000 | – 2 |
| | | 1,01 | 3600 | 0,6 | 4 | $5.10^{11}$ | > 1000 | – 2 |
| | | 1,02 | 2000 | 6,0 | 3 | $2.10^{11}$ | > 1000 | – 65 |
| 1 % Ta + 0,2 % Cu | 1432°C – 1 h Descente rapide | 0,99 | 3160 | 2,0 | – | $10^{10}$ | 10 | – 7 |
| | | 1,00 | 3660 | 0,7 | 2 | $10^{12}$ | 1000 | – 1 |
| | | 1,01 | 5400 | 0,9 | 5 | $5.10^{11}$ | > 1000 | – 1 |
| | | 1,02 | 4900 | 5 | 9 | $10^{11}$ | 1000 | – 70 |
| 1 % Ta + 0,2 % Cu | 1452°C – 8 h | 0,99 | 10000 | 8 | 4 | $10^{9}$ | – | – 22 |
| | | 1,00 | 4200 | 0,4 | 2,5 | $10^{12}$ | 200 | – 2 |
| | | 1,01 | 7500 | 0,5 | 12 | $5.10^{11}$ | 200 | – 2 |
| | | 1,02 | 10000 | 1,0 | 16 | $5.10^{11}$ | 200 | – 14 |
| 0,5 % Nb + 0,1 % Cu | 1430°C – 1 h | 0,99 | 4200 | 2,5 | 1 | $10^{11}$ | 50 | – 12 |
| | | 1,00 | 5700 | 1,0 | 1 | $10^{11}$ | 800 | – 2 |
| | | 1,01 | 3500 | 2,0 | 2 | $10^{12}$ | 80 | – 20 |

TABLEAU III

| % Bi | Traitement thermique | $\varepsilon$ | tg $\delta$ (%) | ΔC/C(0-150V) (%) | $\rho_i$ (Ω.cm) | $E_s(\rho_i = 10^{10}$ Ω.cm) (V/mm) | ΔC/C($10^3$-$10^6$Hz) (%) |
|---|---|---|---|---|---|---|---|
| 0,1 | 1436°C - 1 h | 7300 | 1,5 | 9 | $2.10^{11}$ | 500 | - 15 |
| 0,2 |  | 4800 | 0,7 | 0,6 | $5.10^{11}$ | > 1500 | - 7 |
| 0,4 |  | 3600 | 0,8 | 3,5 | $5.10^{11}$ | > 1500 | - 7 |
| 0,8 |  | 1700 | 1,0 | 1 | $5.10^{11}$ | > 1500 | - 7 |
| 1,6 |  | 1400 | 1,5 | 0,5 | $5.10^{11}$ | > 1500 | - 29 |
| 0,1 | 1436°C - 1 h Descente rapide | 11000 | 1,5 | 13,5 | $10^{11}$ | 400 | - 10 |
| 0,2 |  | 6900 | 1,0 | 7,5 | $10^{11}$ | 1000 | - 5 |
| 0,4 |  | 5700 | 1,0 | 5,5 | $10^{11}$ | > 1000 | - 3 |
| 0,8 |  | 3050 | 1,0 | 5 | $10^{11}$ | > 1000 | - 4 |
| 1,6 |  | 2100 | 1,0 | 1,7 | $10^{12}$ | > 1000 | - 13 |
| 0,2 | 1436°C - 2 h | 5200 | 1,0 | 4,5 | $10^{11}$ | > 1000 | - 13 |
| 0,4 |  | 4100 | 1,0 | 7 | $10^{11}$ | 800 | - 13 |
| 0,2 | 1436°C - 4 h | 6300 | 0,8 | 6 | $5.10^{11}$ | > 1000 | - 6 |
| 0,4 |  | 4850 | 0,8 | 8 | $5.10^{11}$ | 800 | - 6 |
| 0,2 | 1436°C - 1 h (montée 14 h) | 7300 | 0,9 | 9 | $2.10^{11}$ | > 1500 | - 8 |
| 0,4 |  | 4000 | 0,9 | 2,5 | $5.10^{11}$ | 500 | - 8 |
| 0,2 | 1436°C - 8 h (montée 14 h) | 9250 | 0,7 | 13 | $5.10^{11}$ | 300 | - 12 |
| 0,4 |  | 6300 | 0,8 | 8 | $5.10^{11}$ | 500 | - 9 |

TABLEAU IV

| Dopants p | Traitement thermique | $\varepsilon$ | tg $\delta$ (%) | $\Delta C/C(0\text{-}150V)$ (%) | $\rho_i$ ($\Omega$.cm) | $E_s(\rho_i = 10^{10} \Omega.cm)$ (V/mm) | $\Delta C/C(10^3\text{-}10^6 Hz)$ (%) |
|---|---|---|---|---|---|---|---|
| 0,2 % Al | 1436°C – 1 h | 6900 | 0,7 | 11 | $5.10^{11}$ | 400 | – 5 |
| 0,2 % Cu | | 3600 | 0,8 | 3,5 | $5.10^{11}$ | > 1000 | – 7 |
| 0,2% Cu+0,2% Al | | 6150 | 0,8 | 8 | $5.10^{11}$ | 500 | – 3 |
| 0,2 % Al | 1436°C – 1 h | 10100 | 0,8 | 15 | $2.10^{11}$ | 250 | – 6 |
| 0,2 % Cu | (montée 14 h) | 4000 | 0,9 | 2,5 | $5.10^{11}$ | >1000 | – 8 |
| 0,2% Cu+0,2%Al | | 7350 | 0,9 | 9 | $2.10^{11}$ | 500 | – 4 |
| 0,2 % Al | 1436°C – 8 h | 12000 | 0,7 | 17 | $5.10^{11}$ | 200 | – 9 |
| 0,2 % Cu | (montée 14 h) | 6300 | 0,8 | 8 | $5.10^{11}$ | 500 | – 9 |
| 0,2%Cu+0,2% Al | | 9650 | 0,7 | 14 | $5.10^{11}$ | 200 | – 6 |

13

TABLEAU V

| Dopants p | Traitement thermique | $\varepsilon$ | tg $\delta$ (%) | $\Delta C/C(0\text{-}150V)$ (%) | $\rho_i(\Omega.cm)$ | $E_s(\rho_i=10^{10}\Omega.cm)$ (V/mm) | $\Delta C/C(10^3\text{-}10^6 Hz)$ (%) |
|---|---|---|---|---|---|---|---|
| -<br>0,2 % Cu | 1435°C - 1 h | 4000<br>3800 | 0,4<br>0,8 | 1,5<br>3,7 | $5.10^{11}$<br>$10^{11}$ | 100<br>$>1500$ | - 13<br>- 5 |
| -<br>0,2 % Cu | 1435°C - 1 h<br>(montée 14 h) | 4200<br>3700 | 0,5<br>0,8 | 7<br>3 | $5.10^{11}$<br>$10^{11}$ | 1500<br>$>1500$ | - 3<br>- 7 |
| -<br>0,2 % Cu | 1435°C - 8 h | 6350<br>7100 | 0,4<br>0,6 | 0,5<br>11 | $2.10^{11}$<br>$10^{11}$ | 80<br>500 | - 7<br>- 6 |
| -<br>0,2 % Cu | 1435°C - 8 h<br>(montée 14 h) | 7500<br>7500 | 0,4<br>0,6 | 12<br>11 | $10^{11}$<br>$10^{11}$ | 400<br>400 | - 3<br>- 8 |

REVENDICATIONS

1. Procédé de fabrication d'un matériau céramique de type III à base de titanate de strontium $SrTiO_3$, caractérisé en ce qu'il comprend les étapes suivantes :

- préparation d'une chamotte de $SrTiO_3$ par calcination sous air d'un mélange préalablement broyé de carbonate de strontium $SrCO_3$ et d'oxyde de titane $TiO_2$, ce premier broyage permettant également d'ajouter un ou plusieurs éléments, entre 0,2 et 2 % en moles, introduits sous forme d'oxyde de niobium, de tantale, de tungstène, de lanthane et de néodyme, les proportions des constituants étant telles que le rapport stoechiométrique des ions en site titane sur les ions en site strontium soit de 1,

- un second broyage pendant lequel le rapport stoechiométrique est réajusté entre 0,98 et 1,02, ce réajustement étant réalisé par ajout de $SrCO_3$, de $TiO_2$ ou d'un composé ferroélectrique contenant du bismuth,

- frittage sous air entre 1400 et 1450°C.

2. Procédé selon la revendication 1, caractérisé en ce que du cuivre a été ajouté au matériau au cours du second broyage.

3. Procédé selon la revendication 2, caractérisé en ce que l'ajout de cuivre a été effectué à partir d'une solution de nitrate dans l'eau.

4. Procédé selon l'une quelconque des revendications 1 à 3, caractérisé en ce que du bismuth a été ajouté au matériau au cours du second broyage.

5. Procédé selon la revendication 4, caractérisé en ce que l'ajout de bismuth a été effectué à partir de nitrate basique $BiONO_3$.

6. Procédé selon la revendication 4, caractérisé en ce que l'ajout de bismuth a été effectué à partir du composé ferroélectrique suivant $SrBi_4Ti_4O_{15}$.

7. Procédé selon l'une quelconque des revendications 4 à 6, caractérisé en ce que de l'aluminium a été ajouté au matériau au cours du second broyage.

8. Procédé selon l'une quelconque des revendications précédentes, caractérisé en ce que l'opération de frittage comprend, après le palier de température situé entre 1400 et 1450°C, une descente rapide en température jusqu'à environ 1200°C à une vitesse de 1000°C par heure.

9. Matériau céramique de type III à base de titanate de strontium $SrTiO_3$ et à diamètre moyen de grains inférieur à 10 $\mu$, caractérisé en ce qu'il comprend entre 0,2 et 2 % en moles d'un ou de plusieurs des éléments suivants : niobium, tantale, tungstène, lanthane et néodyme.

10. Matériau céramique selon la revendication 9, caractérisé en ce qu'il comprend en outre entre 0,1 et 1 % en moles de bismuth.

11. Matériau céramique selon la revendication 10, caractérisé en ce que le taux de bismuth est compris entre 0,2 et 0,4 % en moles.

12. Matériau céramique selon l'une quelconque des revendications 9 à 11, caractérisé en ce qu'il comprend aussi entre 0,1 et 0,5% en moles de cuivre.

13. Matériau céramique selon l'une quelconque des revendications 9 à 12, caractérisé en ce qu'il comprend aussi entre 0,1 et 0,5% en moles d'aluminium.

14. Condensateur multicouche dans lequel le diélectrique est un matériau céramique, caractérisé en ce que ce matériau est un matériau céramique selon l'une quelconque des revendications 9 à 13.

Office européen
des brevets

**RAPPORT DE RECHERCHE EUROPEENNE**

**0244300**
Numéro de la demande

EP  87 40 0896

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,A | GB-A-2 084 986 (UNIVERSITY OF ILLINOIS FOUNDATION) <br> * Revendications 1-18; page 2, exemple 1 * | 1-14 | C 04 B  35/46 <br> H 01 G   4/12 |
| | --- | | |
| A | DE-A-3 148 811 (DROLORIC ELECTRONIC GmbH) <br> * Revendications 1-6 * | 1 | |
| | ----- | | |

DOMAINES TECHNIQUES
RECHERCHES (Int. Cl.4)

C 04 B
H 01 G

Le présent rapport de recherche a été établi pour toutes les revendications

| Lieu de la recherche | Date d'achèvement de la recherche | Examinateur |
|---|---|---|
| LA HAYE | 12-08-1987 | SCHURMANS H.D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82